# EUROPÄISCHE PATENTSCHRIFT

(11) **EP 2 824 823 B1**
(45) Veröffentlichungstag und Bekanntmachung des Hinweises auf die Patenterteilung: **20.01.2016**
(21) Anmeldenummer: 13175759.3
(22) Anmeldetag: 09.07.2013
(51) Int. Cl.: H02M 7/521

(54) **Wechselrichtersteuerung mit Chiptemperierung**
Inverter controller with chip tempering
Commande d'onduleur avec régulation de température de la puce

(43) Veröffentlichungstag der Anmeldung: 14.01.2015
(73) Patentinhaber: Siemens Aktiengesellschaft, 80333 München (DE)
(72) Erfinder: Dillig, Reinhold, 96117 Memmelsdorf (DE); Weis, Benno, 91334 Hemhofen (DE)

(56) Entgegenhaltungen:
- DE-A1- 10 250 731
- DE-A1-102009 016 764
- JP-A- H0 549 298
- MUSALLAM M ET AL: "Estimation and control of power electronic device temperature during operation with variable conducting current", 20070412, Bd. 1, Nr. 2, 12. April 2007 (2007-04-12), Seiten 111-116, XP006028543,
- LIXIANG WEI ET AL: "Analysis of PWM frequency control to improve the lifetime of PWM inverter", ENERGY CONVERSION CONGRESS AND EXPOSITION, 2009. ECCE. IEEE, IEEE, PISCATAWAY, NJ, USA, 20. September 2009 (2009-09-20), Seiten 900-907, XP031887608, DOI: 10.1109/ECCE.2009.5316129 ISBN: 978-1-4244-2893-9

## Beschreibung

Die Erfindung betrifft ein Verfahren zum Steuern eines Wechselrichters sowie einen Wechselrichter. Der Wechselrichter weist zwei Gleichspannungseingänge und zwei oder mehr Wechselspannungsausgänge auf. Zu der Erfindung gehört auch ein Frequenzumrichter mit einem solchen Wechselrichter. Schließlich gehört zu der Erfindung noch eine elektrische Maschine, bei welcher elektrische Wicklungen eines Stators mit dem genannten Wechselrichter bestromt werden können.

Mit dem genannten Wechselrichter (Englisch: Inverter) ist es möglich, in bekannter Weise aus einer Gleichspannung, die zwischen den beiden Gleichspannungseingängen anliegt, an jedem der Wechselspannungsausgänge eine Wechselspannung mit einstellbarer Frequenz und mittlerer Amplitude zu erzeugen. Hierzu ist jeder Wechselspannungsausgang über eine Schaltbrücke, z.B. einer Halbbrücke, mit den beiden Gleichspannungseingängen gekoppelt. Durch Schalten der Schaltbrücke wird der jeweilige Wechselspannungsausgang dann abwechselnd galvanisch mit einem der beiden Gleichspannungseingänge gekoppelt, so dass am Wechselspannungsausgang das Potential des jeweiligen Gleichspannungseingangs anliegt. Durch Ansteuern der Schaltbrücke mit einem Schaltsignal kann dann ein gewünschter Sollverlauf der Wechselspannung an dem Wechselspannungsausgang durch ein gepulstes Wechselspannungssignal angenähert werden. Wechselrichter dieser Art können z.B. als Zweipunkt-Wechselrichter, Dreipunkt-Wechselrichter ausgestaltet sein.

Zum Erzeugen des gepulsten Wechselspannungssignals an einem Wechselspannungsausgang sind prinzipiell zwei Verfahren bekannt. Das eine sieht eine Zweipunkt-Stromregelung vor, bei welcher die Schaltbrücke immer dann umgeschaltet wird, wenn ein Ausgangs-Wechselstrom am Wechselspannungsausgang ein Toleranzband verlässt, das um den Sollverlauf des Wechselstromes gelegt ist. Ein Aspekt der Erfindung betrifft eine solche Toleranzbandregelung durch einen Toleranzbandregler. Je breiter das Toleranzband ist, desto seltener müssen die Schaltzustände der Schaltbrücken angepasst werden. Insgesamt ist somit bei jeder Schaltbrücke die maximale Schalthäufigkeit innerhalb eines vorbestimmten Zeitintervalls aber durch die breite des Toleranzbandes steuerbar.

Ein anderes Steuerverfahren, das durch einen weiteren Aspekt der Erfindung weitergebildet wird, sieht ein pulsweitenmoduliertes Signal vor, d.h. ein Pulssignal. Hierzu wird die Schaltbrücke für einen Wechselspannungsausgang durch einen Pulsgeber mit diesem Pulssignal gesteuert. Das Pulssignal weist abwechselnd einen High-Pegel und einen Low-Pegel auf, und der Wechselspannungsausgang wird entsprechend durch die Schaltbrücke in Abhängigkeit von dem Pulssignal bei High-Pegel mit einem der Gleichspannungseingänge und bei Low-Pegel mit dem anderen der Gleichspannungsausgänge galvanisch gekoppelt.

Bei dem Pulssignal ist hierbei eine Periodendauer der Pulsfolge durch einen zeitlichen Abstand beispielsweise der aufeinanderfolgenden steigenden Schaltflanken bestimmt, wenn also das Pulssignal von Low-Pegel auf High-Pegel wechselt. Innerhalb jeder Periodendauer kann dann das Pulsverhältnis durch das Zeitverhältnis von High-Pegel und Low-Pegel definiert werden. Die Periodendauer beträgt hierbei nur einen Bruchteil der Periodendauer der Grundschwingung des Sollverlaufes der zu erzeugenden Wechselspannung. Mit anderen Worten gibt es beispielsweise bei einem sinusförmigen Sollverlauf der Wechselspannung mindestens zehn Periodendauern oder sogar mindestens sogar 100 Periodendauern des Pulssignals, innerhalb welchen dann jeweils das Pulsverhältnis gemäß einem Sollverlaufssignal für die Wechselspannung oder einen Wechselstrom eingestellt wird. Bei einem Maximum des sinusförmigen Sollverlaufs wird das Pulsverhältnis dann z.B. derart eingestellt, dass der High-Pegel länger als der Low-Pegel oder sogar durchgehend aufrecht erhalten bleibt, so dass der Wechselspannungsausgang lange an einem der Gleichspannungseingänge (z.B. mit Plus-Potential) gekoppelt bleibt. Bei einem Minimum des sinusförmigen Sollverlaufs wird entsprechend umgekehrt das Pulsverhältnis derart eingestellt, dass der High-Pegel nur kurz oder gar nicht und dafür der Low-Pegel lange gehalten wird. Dann liegt der Wechselspannungsausgang länger an dem anderen Gleichspannungseingang (also z.B. Minus-Potential). Insgesamt ist hierbei bei jeder Schaltbrücke die maximale Schalthäufigkeit innerhalb eines vorbestimmten Zeitintervalls aber durch die Periodendauer der Pulsweitenmodulation (PWM) vorgegeben oder begrenzt.

In Frequenzumrichtern werden üblicherweise als Schalter in den Schaltbrücken Leistungshalbleitermodule eingesetzt, die Halbleiterchips enthalten. Abhängig von dem Ausgangsstrom an dem jeweiligen Wechselspannungsausgang und der Schaltfrequenz des Wechselrichters erwärmen sich diese Chips.

In vielen Anwendungsfällen eines Wechselrichters, insbesondere eines Frequenzumrichters, wird der Wechselrichter bei kleiner Ausgangsfrequenz der Wechselspannung an den Wechselspannungsausgängen betrieben, also z.B. bei 5 Hz Ausgangsfrequenz. Ist hierbei die Periodendauer der Grundschwingung des Ausgangsstromes größer als die thermische Zeitkonstante der Halbleiterchips, so ist der Verlauf des Ausgangsstromes auch in dem Temperaturverlauf des Halbleiterchips wiederzufinden.

Bedingt durch die Aufbautechnik von Halbleitermodulen (Lötverbindungen, Bonddrahtverbindungen) führen diese zeitlichen Änderungen der Temperatur, auch Temperaturzyklen genannt, zu einer Alterung der Halbleitermodule, weil sich die unterschiedlichen Komponenten, zum Beispiel der Lötverbindungen, mit der Temperatur unterschiedlich stark ausdehnen. Hierdurch wird insbesondere ein mechanischer Stress auf die Lötverbindungen ausgeübt. Ein großer Temperaturhub in einem Halbleitermodul bedeutet also eine vorzeitige Alterung oder einen größeren Verschleiß der darin enthaltenen Komponenten im Vergleich zu einem gleichmäßigen Temperaturgang.

Diese Problematik ist in der Leistungselektronik unter dem Begriff "Wechsellastfestigkeit" bekannt. Man ist bestrebt, bei einem Wechselrichter, der mit kleiner Ausgangsfrequenz betrieben wird, diese Wechsellast, das heißt den Temperaturhub, zu reduzieren.

Aus der DE 10 2009 016 764 A1 ist hierzu ein Verfahren bekannt, bei welchem bei geringem Ausgangsstrom des Wechselrichters die Pulsfrequenz der Pulssignale eines pulsweitenmodulierten Wechselrichters erhöht wird, um den Temperaturverlauf zu vergleichmäßigen. Die erhöhte Schalthäufigkeit bewirkt nämlich einen Anstieg der Verlustleistung in den Halbleitermodulen. Hierdurch können sie sich nicht abkühlen. Sie bleiben dann also zwar heiß, es wird aber der beschriebene Temperaturhub, das heißt die Wechsellast, reduziert. Nachteilig bei dem in der Druckschrift beschriebenen Verfahren ist, dass es bei einem Wechselstrom mit großer Amplitude und kleiner Ausgangsfrequenz nicht anwendbar ist. In diesem Fall sind die Temperaturzyklen des Halbleiterchips nicht reduzierbar.

Eine allgemein bekannte, jederzeit verwendbare Lösung besteht darin, die Leistungshalbleiter so stark überzudimensionieren, dass der auftretende Temperaturhub auf einen unkritischen Wert reduziert wird. In der Praxis ist eine Überdimensionierung um etwa den Faktor 4 erforderlich, was hohe Kosten bei der Herstellung eines entsprechenden Wechselrichters verursacht.

Aus der Veröffentlichung XP 6028543 "Estimation and control of power electronic device temperature during operation with variable conducting current" ist bekannt, die Temperaturschwankungen eines Halbleiterschalters zu reduzieren, indem für eine Temperaturregelung die Schaltfrequenz des Halbleiterschalters als Stellgröße verwendet wird. Die Temperaturregelung setzt auf einem thermische Modell des Halbleiterschalters auf.

Die japanische Patentanmeldung JP H05 49298 A beschreibt eine Toleranzbandregelung für einen Wechselrichter, wobei die Temperatur eines Schalters einen Einfluss auf die Breite des Toleranzbandes und damit auch auf die Schaltfrequenz hat.

Die DE 102 50 731 A1 beschreibt ein Verfahren zur Überwachung der Sperrschichttemperatur von Leistungshalbleitern in mehrphasigen Wechselrichtern, insbesondere bei niedrigen Ausgangsfrequenzen.

Der Erfindung liegt die Aufgabe zugrunde, in einem Wechselrichter, insbesondere einem Wechselrichter eines Frequenzumrichters, einen schonenden Betrieb von dessen Schaltbrücken zu ermöglichen.

Die Aufgabe wird durch ein Verfahren gemäß Patentanspruch 1, ein Verfahren gemäß Patentanspruch 2, einen Wechselrichter gemäß Patentanspruch 13, einen Frequenzumrichter gemäß Patentanspruch 16 und eine elektrische Maschine gemäß Patentanspruch 17 gelöst. Vorteilhafte Weiterbildungen der Erfindung sind durch die Unteransprüche gegeben.

Der erfindungsgemäße Wechselrichter weist in an sich bekannter Weise die beiden Gleichspannungseingänge und zwei oder drei oder mehr als drei Wechselspannungsausgänge auf. Jeder Wechselspannungsausgang ist dabei Bestandteil eines Schaltungsteils, der hier als Phasenzweig, oder kurz Phase, bezeichnet ist. Jeder Phasenzweig umfasst zusätzlich zu dem Wechselspannungsausgang eine Schaltbrücke zum abwechselnden elektrischen, insbesondere galvanischen, Koppeln des Wechselspannungsausgangs mit den Gleichspannungseingängen sowie einen Modulator zum Steuern der Schaltbrücke mittels eines Pulssignals. Der Modulator kann als Pulsgeber für die beschriebene Pulsweitenmodulation oder als Toleranzbandregler für die beschriebene Toleranzbandregelung ausgelegt sein. Als Pulsgeber ist der Modulator dann dazu ausgestaltet, wie beschrieben das Pulssignal mit einer vorbestimmten Periodendauer zu erzeugen und innerhalb jeder Periodendauer ein Pulsverhältnis zwischen High-Pegel und Low-Pegel abhängig von einem externen Sollverlaufssignal festzulegen. Durch das Sollverlaufssignal kann einen Sollverlauf der Wechselspannung oder des Wechselstromes am jeweiligen Wechselspannungsausgang vorgegeben sein. Als Toleranzbandregler ist der Modulator dazu ausgestaltet, die Schaltbrücke, wie ebenfalls beschrieben, in an sich bekannter Weise immer dann umzuschalten, wenn ein Ausgangs-Wechselstrom am Wechselspannungsausgang ein Toleranzband verlässt, das um einen durch das Sollverlaufssignals vorgegebenen Sollverlauf des Ausgangs-Wechselstroms gelegt ist und das eine bestimmte Toleranzband-Breite aufweist. Bevorzugt weist der erfindungsgemäße Wechselrichter drei Phasenzweige auf.

Erfindungsgemäß ist der Wechselrichter in der Weise weitergebildet, dass jeder Modulator dazu ausgelegt ist, im Betrieb des Wechselrichters die Schalthäufigkeit seines Pulssignals und damit seiner Schaltbrücke unabhängig von jedem anderen Modulator in Abhängigkeit von einem eigenen Schalthäufigkeitsparameter zu verändern. Die Schalthäufigkeit ist hier insbesondere die Anzahl der Schaltvorgänge innerhalb eines vorbestimmten Zeitintervalls, z.B. innerhalb von 100ms, oder die Schaltfrequenz. Die Schalthäufigkeit des Pulssignals kann z.B. durch die Anzahl der steigenden oder der fallenden Schaltflanken im Pulssignal definiert sein.

Falls bei dem Wechselrichter in jedem Phasenzweig jeweils ein Pulsgeber als Modulator vorgesehen ist, ist jeder Pulsgeber dabei dazu ausgelegt, im Betrieb des Wechselrichters als den Schalthäufigkeitsparameter die aktuelle Periodendauer seines Pulssignals in Abhängigkeit von dem jeweiligen Schalthäufigkeitsparameter einzustellen. Durch Verändern des Werts des jeweiligen Pulsweitenparamaters wird damit für den betreffenden Phasenzweig die Schalthäufigkeit der Schaltbrücke verändert. Mit jeweiliger Schalthäufigkeitsparameter ist gemeint, dass der Pulsgeber die Periodendauer seines Pulssignals unabhängig von jedem anderen Pulsgeber einstellt.

Falls bei dem Wechselrichter in jedem Phasenzweig jeweils ein Toleranzbandregler als Modulator vorgesehen ist, ist jeder Toleranzbandregler dazu ausgelegt, als den Schalthäufigkeitsparameter die Toleranzband-Breite unabhängig von jedem anderen der Toleranzbandregler einzustellen. Je schmaler das Toleranzband ist, also je geringer seine Toleranzband-Breite, desto häufiger kommt es zu einem Schaltereignis bei einer Toleranzbandregelung.

Der erfindungsgemäße Wechselrichter weist den Vorteil auf, dass sich durch das unabhängige Einstellen der Periodendauer bzw. der Toleranzband-Breite in jedem der Phasenzweige ein Freiheitsgrad in dem Wechselrichter ergibt, der dazu genutzt werden kann, die Schaltbrücke des Phasenzweigs auf unterschiedliche, im Folgenden erläuterte Weisen schonender zu betreiben.

Das erfindungsgemäße Verfahren ergibt sich im Betrieb des erfindungsgemäßen Wechselrichters. Mit anderen Worten wird bei dem erfindungsgemäßen Verfahren durch den Modulator jedes Phasenzweigs jeweils ein Pulssignal erzeugt, bei dem die sich in einer vorbestimmten Zeitdauer ergebende Schalthäufigkeit in Abhängigkeit von dem jeweiligen Schalthäufigkeitsparameter des Modulators eingestellt wird.

Der Schalthäufigkeitsparameter wird bevorzugt des Weiteren unabhängig vom Sollverlaufssignal eingestellt. Es wird also derselbe Sollverlauf der Wechselspannung oder des Wechselstromes am Wechselspannungsausgang entweder durch Festlegen eines entsprechenden Pulsverhältnisses innerhalb jeder Periodendauer (Pulsweitemodulation) oder durch die Toleranzbandregelung angestrebt, auch wenn sich dabei die Schalthäufigkeit selbst vergrößert oder verkleinert. Mit anderen Worten verursacht die Veränderung des Schalthäufigkeitsparameters keine Veränderung der Spannungs-Zeit-Fläche des Pulssignals. So ergibt sich ein mittlerer Spannungswert bzw. Stromstärkewert am jeweiligen Wechselspannungsausgang, der allein durch das Sollverlaufssignal vorgegeben werden kann. Hierdurch ergibt sich der Vorteil, dass eine Maßnahme zum schonenden Betrieb der jeweiligen Schaltbrücke durch Verändern der Schalthäufigkeit nicht z.B. eine Regelung einer mit dem Wechselrichter betriebenen elektrischen Maschine beeinträchtigt.

Ein weiterer Vorteil ergibt sich, wenn sich durch unterschiedliche Werte der Schalthäufigkeitsparameter insgesamt zwischen den Phasenzweigen innerhalb eines vorbestimmten Zeitintervalls unterschiedliche Schalthäufigkeiten der Schaltbrücken ergeben. Das besagte Zeitintervall ist natürlich größer als eine Periodendauer, also z.B. 10 Periodendauern. Das Zeitintervall kann z.B. 100ms oder 0,5s oder 1s betragen. Durch Einstellen einer kleinen Periodendauer bzw. kleineren Toleranzband-Breite wird die Schaltbrücke entsprechend häufiger in dem Zeitintervalls geschaltet als bei einer Schaltbrücke, bei welcher eine größere Periodendauer bzw. Toleranzband-Breite eingestellt ist. In der schneller schaltenden Schaltbrücke wird dann entsprechend mehr Verlustleistung durch das häufigere Schalten umgesetzt. Die Schaltelemente der Schaltbrücke werden dann stärker aufgeheizt. Hierdurch kann sich in vorteilhafter Weise in der eingangs beschriebenen Weise der Temperaturhub in der Schaltbrücke mit der größeren Schalthäufigkeit verringert werden. Gleiches gilt wie beschrieben bei einer Verringerung der Toleranzband-Breite. Im Unterschied zum Stand der Technik erfolgt dieses Zwischenheizen innerhalb einer Periode des Sollverlaufs der Wechselspannung oder des Wechselstrom aber individuell in jedem Phasenzweig, also unabhängig von der momentanen Stromstärke in den übrigen Phasenzweigen. Deshalb ist die Stromamplitude des Sollverlaufs ohne Bedeutung.

Die Verringerung des Temperaturhubs ist aber nicht die einzige Maßnahme zum schonenden Betrieb der Schaltbrücken, die mittels des erfindungsgemäßen Wechselrichters realisiert werden kann.

Gemäß einer vorteilhaften Weiterbildung des erfindungsgemäßen Verfahrens wird bei jedem Phasenzweig jeweils der Schalthäufigkeitsparameter, also die Pulsdauer oder die Toleranzband-Breite, in Abhängigkeit von einem Gradienten des Sollverlaufs der Wechselspannung oder des Wechselstromes für den Wechselspannungsausgang des Phasenzweiges eingestellt. Hierdurch kann in vorteilhafter Weise die Schalthäufigkeit minimiert werden, was ebenfalls ein wünschenswerter Betriebsverlauf sein kann. Wird z.B. innerhalb einer Schwingung eines sinusförmigen Sollverlaufs erkannt, dass der Sollverlauf momentan sehr flach verläuft, das heißt der Gradient des Sollverlaufs betragsmäßig kleiner als ein vorbestimmter Wert ist, so kann durch Vergrößern der Periodendauer bzw. der Toleranzband-Breite die Schalthäufigkeit reduziert werden. Übersteigt der Gradient der Sollverlaufs dann betragsmäßig einen vorbestimmten Wert, so kann die Periodendauer verkürzt bzw. die Toleranzband-Breite verringert werden und hierdurch am Wechselspannungsausgang der tatsächliche mittlere Spannungswert bzw. Stromstärkewert genauer an den sich schnell verändernden Sollverlauf angepasst werden. Mit anderen Worten wird bei flachem Sollverlauf ein schonender Betrieb durch Verringerung der Schalthäufigkeit und bei betragsmäßig steilerem Sollverlauf eine genauere Nachführung der Istwerte an die Sollwerte erreicht.

Eine andere Möglichkeit für einen schonenden Betrieb sieht eine Ausführungsform des Verfahrens vor, bei welcher bei jedem Phasenzweig jeweils der Schalthäufigkeitsparameter in Abhängigkeit von einer Temperatur zumindest eines Schaltelements der Schaltbrücke eingestellt wird. So kann durch Verändern der Periodendauer bzw. der Toleranzband-Breite und damit letztendlich der Schalthäufigkeit die Temperatur des Schaltelements auf eine Solltemperatur eingeregelt werden. Zumindest kann die Temperatur innerhalb eines Solltemperaturintervalls gehalten werden. Durch diese Maßnahmen kann der Temperaturhub, das heißt die beschriebene Wechsellast, kleiner als ein vorbestimmter Grenzwert gehalten werden.

Das Messen der Temperatur kann aber bei bestimmten Modellen von Wechselrichtern umständlich oder nur mit hohem Schaltungsaufwand realisierbar sein. Eine andere vorteilhafte Weiterbildung des Verfahrens sieht deshalb vor, bei jedem Phasenzweig jeweils den Schalthäufigkeitsparameter in Abhängigkeit von einer Stromstärke eines Ausgangs-Wechselstromes, d.h. des Phasenstroms in dem Phasenzweig, einzustellen. Der Phasenstrom wird in der Regel sowieso im Zusammenhang mit einer Drehzahlregelung oder Momentenregelung einer elektrischen Maschine gemessen, wenn diese durch den Wechselrichter betrieben wird. So liegt bereits ein Messwert für die Stromstärke in jedem Phasenzweig vor, der auch zum Einstellen eines Schalthäufigkeitsparameters genutzt werden kann. Insbesondere ist vorgesehen, bei einem Nulldurchgang der Stromstärke oder bei einer Stromstärke, die betragsmäßig kleiner als ein vorbestimmter Höchstwert ist, den Schalthäufigkeitsparameter auf einen Wert zu stellen, bei welchem sich eine kleinere Periodendauer bzw. Toleranzband-Breite ergibt als bei einer betragsmäßig größeren Stromstärke. Hierdurch kann das Auskühlen eines Schaltelements der Schaltbrücke bei geringer Stromstärke vermieden werden, wenn also die Verlustleistung aufgrund der geringen Stromstärke sinkt. So kann insbesondere bei geringer Drehzahl einer elektrischen Maschine, wenn also die Drehzahl kleiner als ein vorbestimmter Mindestdrehzahlwert (z.B. 5 Hz oder 2 Hz) ist, das beschriebene Pulsieren der Temperatur in den Schaltbrücken vermieden werden, indem in jeder Phase unabhängig von den anderen Phasen die Pulsdauer bzw. die Toleranzband-Breite in Abhängigkeit von der aktuellen Stromstärke in der jeweiligen Phase eingestellt wird.

Ein anderer wichtiger Indikator für einen kritischen Betrieb des Wechselrichters ist eben die Sollfrequenz für die am Wechselspannungsausgang zu erzeugende Wechselspannung und/oder den zu erzeugenden Wechselstrom. Bei verhältnismäßig großer Sollfrequenz ergibt sich allein durch die Schalthäufigkeit zum Erzeugen dieser hohen Frequenz ein gleichmäßiger Temperaturverlauf in den Schaltbrücken. Hier wäre eine Vergrößerung der Schalthäufigkeit zum zusätzlichen Beheizen der Schaltbrücken schädlich. Entsprechend wird bei der Weiterbildung des Verfahrens in jedem Phasenzweig jeweils der Schalthäufigkeitsparameter in Abhängigkeit von der Sollfrequenz eingestellt und hierbei der Schalthäufigkeitsparameter nur verändert, falls die Sollfrequenz kleiner als eine vorbestimmte Höchstfrequenz ist. Insbesondere beträgt die Höchstfrequenz bevorzugt 5 Hertz, insbesondere 2 Hertz. Hier kann bei typischen Zeitkonstanten für das thermische Verhalten von gängigen Halbleiterchips für Schaltbrücken erreicht werden (sie betragen üblicherweise 0,5 Hertz bis 1,5 Hertz), dass ein Pulsieren der Temperatur der Schaltelemente der Schaltbrücken mit der Sollfrequenz vermieden wird.

Durch das unabhängige Einstellen der Periodendauer bzw. der Toleranzband-Breite in jedem Phasenzweig kann sich das Problem ergeben, dass sich Schaltereignisse in zwei Phasenzweigen überschneiden, das heißt zwei Wechselspannungsausgänge gleichzeitig von einem Gleichspannungseingang zum jeweils anderen Gleichspannungseingang umgeschaltet werden. Insbesondere bei Polaritätswechseln mit unterschiedlichen Vorzeichen können Induktivitäten in einer elektrischen Maschine, die durch den Wechselrichter gesteuert wird, unerwünscht starke Reflexionen verursachen. Polaritätswechsel mit unterschiedlichen Vorzeichen ergeben sich, wenn in einem Phasenzweig ein Schaltereignis vom Plus-Potential auf das Minus-Potential (Verbinden des Wechselspannungsanschlusses mit dem Minus-Gleichspannungsanschluss) und in einem anderen Phasenzweig ein Schaltereignis vom Minus-Potential auf das Plus-Potential stattfindet (Verbinden mit dem Plus-Gleichspannungsanschluss).

Es ist gemäß einer Ausführungsform vorgesehen, im Voraus, also vor diesen Schaltereignissen, zu überprüfen, ob bei gegebenen Sollverlaufssignalen und gegebenen Schalthäufigkeitsparametern zumindest zweier Phasenzweige für deren Schaltbrücken ein gleichzeitiges Schaltereignis mit unterschiedlichem Polaritätswechsel resultieren würde. Gegebenenfalls wird dann in zumindest einem dieser Phasenzweige ein Schaltzeitpunkt der Schaltbrücke verschoben, so dass die Schaltbrücken zu unterschiedlichen Zeitpunkten geschaltet werden. Hierdurch werden in vorteilhafter Weise die beschriebenen Doppelübergänge vermieden. Das Verschieben des Schaltzeitpunkts in zumindest einem Phasenzweig erfolgt hierbei bevorzugt um einen Zeitabstand, der kleiner als die Periodendauer des jeweiligen Phasenzweiges ist. Mit anderen Worten wird durch eine Überprüfungseinheit, z.B. einen Schaltungslogik oder eine SPS (Speicherprogrammierbare Steuerung) zumindest ein Steuersignal derart verschoben, dass zwischen Polaritätswechseln mit unterschiedlichen Vorzeichen eine vorbestimmte Mindestzeit liegt.

Damit die beschriebene Unabhängigkeit von dem Sollverlaufssignal erhalten bleibt, sieht eine Ausführungsform des Verfahren vor, in einem Phasenzweig zu einem aktuellen Wert des Schalthäufigkeitsparameters für das sich ergebende Pulssignal eine Spannungs-Zeit-Fläche zu ermitteln, die sich durch ein Pulsverhältnis von aufeinanderfolgendem High-Pegel und Low-Pegel ergibt. Um dann zusätzliche Schaltereignisse bei der Schaltbrücke zu bewirken, wird zwar der Schalthäufigkeitsparameter verändert, hierbei aber die Spannungs-Zeit-Fläche des Pulssignals beibehalten. Dauerte also vor dem Verändern des Schalthäufigkeitsparameter eine Periodendauer des Pulssignals eine Zeitdauer Tp an, in welcher das Pulssignal z.B. genau einmal für eine Zeitdauer T1 den High-Pegel und einmal für eine Zeitdauer T2 der Low-Pegel aufwies (Tp=T1+T2), so wird durch das Verändern des Schalthäufigkeitsparameters zwar innerhalb dieser Periodendauer Tp häufiger zwischen High-Pegel und Low-Pegel umgeschaltet. Hierbei beträgt aber die Summenzeitdauer für den High-Pegel wieder T1 und für den Low-Pegel entsprechend T2.

Diese Methode kann auch zum Vermeiden der Doppelübergänge vorteilhaft genutzt werden. Hierzu wird gemäß einer Ausführungsform der Erfindung in einem Phasenzweig zum Heizen eines Schalters seiner Schaltbrücke eine Anzahl N von zusätzlichen, zu einem ursprünglich Pulssignal hinzuzufügenden Schaltpulsen ermittelt und ein erster Anteil, z.B. die Hälfte N/2, der zusätzlichen Schaltpulse in einem Zeitraum realisiert, in welchem das ursprüngliche Pulssignal einen Low-Pegel aufweist, und der verbleibende Anteil der zusätzlichen Schaltpulse in einem Zeitraum realisiert, in welchem das ursprüngliche Steuersignal einen High-Pegel aufweist. Zusätzlich oder alternativ dazu werden ursprüngliche Schaltzeitpunkte des ursprünglichen Pulssignals derart verschoben, dass sich bei dem durch das Hinzufügen der zusätzlichen Schaltpulse zum ursprünglichen Pulssignal ergebenden Schaltsignal eine Spannungs-Zeit-Fläche ergibt, die gleich einer Spannungs-Zeit-Fläche des ursprünglichen Pulssignals ist.

Zu dem erfindungsgemäßen Wechselrichter gibt es ebenfalls vorteilhafte Weiterbildungen.

Eine davon sieht vor, dass eine oder mehrere oder jede der Schaltbrücken jeweils zumindest ein Halbleitermodul aufweist, das als ein monolythisches Bauelement ausgebildet ist. In diesem monolythischen Bauelement befinden sich dann zum einen ein aktiver Schalter, dessen Steuereingang mit dem Pulsgeber gekoppelt ist und also von diesem gesteuert wird, und zum anderen eine Freilaufdiode, um bei eingeschalteten aktiven Schaltern einen Stromfluss in die entgegengesetzte Stromflussrichtung zu ermöglichen. Mit monolythischem Aufbau ist hierbei gemeint, dass der aktive Schalter und die Freilaufdiode als ein einziger Halbleiterchip ausgebildet sind. Hierdurch ergibt sich der Vorteil, dass auch bei einem Stromfluss durch die Freilaufdiode die hierbei in der Freilaufdiode umgesetzte Verlustleistung auch den aktiven Schalter beheizt, obwohl dieser keinen Strom führt. So kann ein Temperaturhub am aktiven Schalter durch Auskühlen im nicht stromführenden Zustand vermieden werden.

Als besonders geeignet hat sich hierbei ein Halbleitermodul erwiesen, das einen rückwärtsleitfähigen Insulated-Gate-Bipolar-Transistor (IGBT) und/oder einen Metal-Oxide-Field-Effect-Transistor (MOSFET) umfasst.

Insbesondere für den Fall, dass sich ein solches monolythisches Bauelement nicht bereitstellen lässt, sieht eine andere vorteilhafte Weiterbildung des Wechselrichters vor, dass die betroffene Schaltbrücke jeweils einen aktiven Schalter und eine zugehörige Freilaufdiode als getrennte Bauteile aufweist, die dann aber durch ein Wärmeleitelement thermisch gekoppelt sind. Dann lässt sich ebenfalls eine Verlustleistung von der Freilaufdiode hin zum aktiven Schalter transferieren, während dieser im gesperrten Zustand ist. Das Wärmeleitelement sollte hierbei bevorzugt eine Wärmeleitfähigkeit von mindestens 4 W/(m*K), insbesondere mindestens 20 W/(m*K), bevorzugt mindestens 40 W/(m*K) aufweisen. Es kann hierzu z.B. aus Aluminium gefertigt sein.

Um die Ausführungsformen des erfindungsgemäßen Verfahrens durchführen zu können, die bereits beschriebenen, speziellen Betriebsweisen für die Schonung der Schaltbrücken vorsehen (Einstellen der Schalthäufigkeitsparameter in Abhängigkeit vom Gradienten des Sollverlaufs, in Abhängigkeit von der Temperatur, in Abhängigkeit von der Stromstärke und so weiter, siehe oben) sieht der Wechselrichter bevorzugt eine Steuereinrichtung vor, die mit jedem Pulsgeber gekoppelt ist und die dazu ausgebildet ist, die entsprechende Ausführungsform des erfindungsgemäßen Verfahrens durchzuführen. Eine solche Steuereinrichtung kann beispielsweise einen Mikrokontroller umfassen.

Wie bereits ausgeführt, gehört zu der Erfindung auch ein Frequenzumrichter. Bei diesem ist eine Einspeiseeinheit über einen Gleichspannungszwischenkreis mit einer Ausführungsform des erfindungsgemäßen Wechselrichters gekoppelt. Mit Einspeiseeinheit ist hierbei eine Einrichtung gemeint, die in dem Zwischenkreis aus einer Wechselspannung eines Versorgungsnetzes, beispielsweise eines 50 Hertz-Wechselspannungsnetzes, eine gleichgerichtete Gleichspannung erzeugt. Ein Beispiel für eine Einspeiseeinheit ist ein netzgeführter Gleichrichter mit Dioden-Halbbrücken. Der erfindungsgemäße Frequenzumrichter zeichnet sich durch eine besonders große Lebensdauer aus, da sein Wechselrichter mit dem erfindungsgemäßen Verfahren besonders schonend betrieben wird.

Die Erfindung wird auch durch eine elektrische Maschine realisiert, bei welcher in einem Stator ein Drehfeld erzeugt wird, das einen Rotor antreibt, wobei elektrische Wicklungen des Stators abwechselnd mit einem Strom aus einem Gleichspannungskreis bestromt werden, indem der Strom durch einen Wechselrichter gesteuert wird, welcher eine Ausführungsform des erfindungsgemäßen Wechselrichters ist. Die erfindungsgemäße elektrische Maschine lässt sich auch bei kleinen Drehzahlen betreiben, ohne dass hierdurch der Wechselrichter aufgrund der hierfür nötigen geringen Ausgangsfrequenz des Stromes für die elektrischen Wicklungen des Stators einen besonders großen Verschleiß aufgrund eines übermäßigen Temperaturhubes unterliegt. Der Temperaturhub kann mit den beschriebenen Maßnahmen vermieden werden.

Im Folgenden ist die Erfindung noch einmal anhand von konkreten Ausführungsbeispielen erläutert. Hierzu zeigt:
- FIG 1: eine schematische Darstellung einer Ausführungsform der erfindungsgemäßen elektrischen Maschine,
- FIG 2: ein Diagramm mit zeitlichen Sollverläufen von Wechselströmen, die in Phasenzweigen eines Wechselrichters der elektrischen Maschine von FIG 1 erzeugt werden sollen,
- FIG 3: ein Diagramm mit Pulssignalen für Schaltbrücken, wie sie gemäß dem Stand der Technik erzeugt werden,
- FIG 4: ein Diagramm mit Pulssignalen für Schaltbrücken des Wechselrichters der elektrischen Maschine von FIG 1, wie sie gemäß einer Ausführungsform des erfindungsgemäßen Verfahrens erzeugt werden,
- FIG 5: ein Diagramm mit Pulssignalen, wie sie gemäß einer weiteren Ausführungsform des erfindungsgemäßen Verfahrens erzeugt werden,
- FIG 6: ein Diagramm mit Pulssignalen, wie sie gemäß einer weiteren Ausführungsform des erfindungsgemäßen Verfahrens erzeugt werden, und
- FIG 7: ein Ablaufdiagramm zu einer Ausführungsform des erfindungsgemäßen Verfahrens.

Die gezeigten Beispiele stellen bevorzugte Ausführungsformen der Erfindung dar.

Bei den im Folgenden erläuterten Ausführungsbeispielen stellen die beschriebenen Komponenten der Ausführungsformen jeweils einzelne, unabhängig voneinander zu beschreibende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

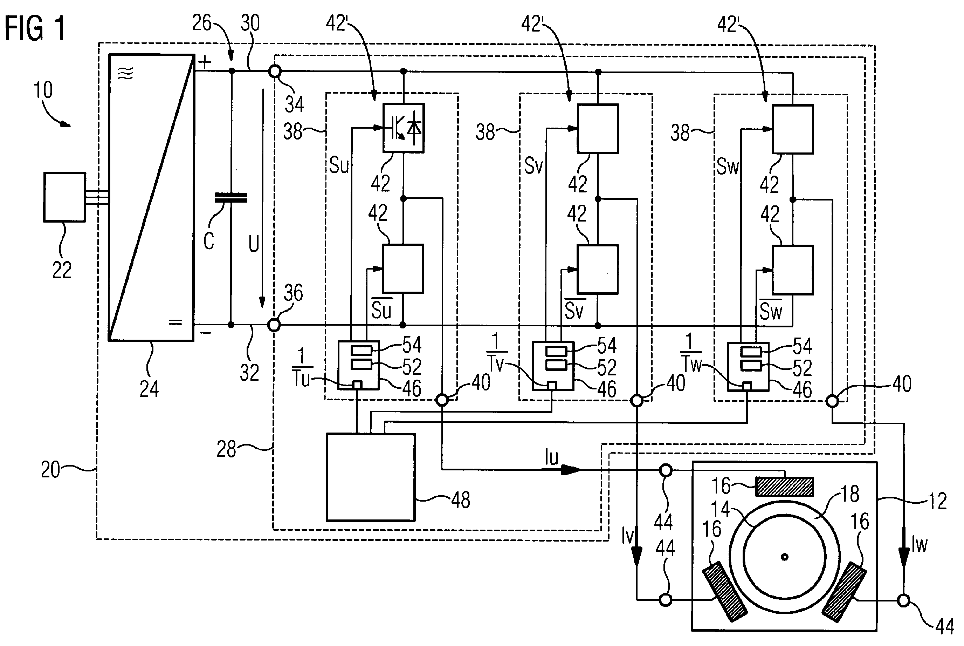

In FIG 1 ist eine elektrische Maschine 10 gezeigt. Die elektrische Maschine 10 weist einen Stator 12 auf, in dem ein Rotor 14 drehbar gelagert ist. Mit elektrischen Wicklungen 16 des Stators 12 kann in einem Luftspalt 18 zwischen Stator 12 und Rotor 14 ein magnetisches Statordrehfeld erzeugt werden. Eine Wechselwirkung mit einem Magnetfeld des Rotors 14 erzeugt ein Drehmoment, welches den Rotor 14 antreibt und bewegt. Beispielsweise kann mittels des Drehmoments des Rotors 14 ein Kraftfahrzeug angetrieben werden.

Zum Erzeugen des magnetischen Drehfelds des Stators 12 mittels der Wicklungen 16 sind die Wicklungen 16 über einen Frequenzumrichter 20 mit einem elektrischen Versorgungsnetz 22, beispielsweise einem dreiphasigen 50 Hertz-Wechselspannungsversorgungsnetz gekoppelt. Der Frequenzumrichter 20 weist eine Einspeiseeinheit 24, einen Zwischenkreis 26 und einen Wechselrichter 28 auf. Die Einspeiseeinheit 24 kann in an sich bekannter Weise als Gleichrichter ausgestaltet sein, mittels welchem aus einer mehrphasigen Wechselspannung des Versorgungsnetzes 22 eine gleichgerichtete Spannung U in dem Zwischenkreis 16 erzeugt wird. Der Zwischenkreis 16 kann beispielsweise eine Plusleitung 30 und eine Minusleitung 32 aufweisen, zwischen denen die Spannung U erzeugt wird. Die Leitungen 30, 32 können über einen Zwischenkreiskondensator T kapazitiv gekoppelt sein, durch welchen ein zeitlicher Verlauf der Spannung U geglättet und elektrische Energie zwischengespeichert werden kann.

Über die Leitungen 30, 32 ist die Einspeiseeinheit 24 mit Gleichspannungsanschlüssen 34, 36 des Wechselrichters 28 gekoppelt. Der Wechselrichter 28 kann beispielsweise drei Phasenzweige 38 mit Schaltbrücken 42' aufweisen, über welche die Gleichspannungseingänge 34, 36 mit Wechselspannungsausgängen 40 des Wechselrichters 28 galvanisch gekoppelt werden können. Die Wechselspannungsausgänge 40 sind mit den Wicklungen 16 des Stators 12 elektrisch verbunden. Durch Erzeugen der jeweiligen Wechselspannung an den Wechselspannungsausgängen 40 mittels der Schaltbrücken 42' aus der Gleichspannung U kann ein Drehstrom in den Wicklungen 16 erzeugt werden, durch welchen das beschriebene magnetische Statordrehfeld im Luftspalt 18 erzeugt wird.

Die Schaltbrücken 42' können jeweils als Halbbrücke ausgestaltet sein, durch welche die beiden Gleichspannungseingänge 36 gekoppelt sind. Jede Schaltbrücke 42' kann ein Schaltelement 42 aufweisen, das beispielsweise als monolythisches Leistungshalbleitermodul ausgestaltet sein kann. In dem in FIG 1 gezeigten Beispiel kann ein Schaltelement beispielsweise einen IGBT mit Freilaufdiode umfassen. Dies ist in FIG 1 bei einem der Schaltelemente 42 durch entsprechende Schaltsymbole angedeutet. Mittels der Schaltelemente 42 einer jeden Schaltbrücke 42' kann durch entsprechendes Schalten eines Schaltelements 42 in einen leitenden beziehungsweise einen sperrenden Zustand erreicht werden, dass der zugehörige Wechselspannungsausgang 40 entweder mit dem Gleichspannungseingang 34 oder dem Gleichspannungseingang 36 galvanisch gekoppelt ist. Hierdurch ergibt sich dann das entsprechende Plus-potential beziehungsweise Minuspotential an dem Wicklungsanschluss 44 der jeweiligen Wicklung 16.

Innerhalb jedes Phasenzweiges 38 werden die Schaltelemente 42 durch einen Pulsgeber 46 mittels eines Pulssignals Su, Sv, Sw gesteuert. Das Pulssignal Su, Sv, Sw kann beispielsweise ein pulsweitenmoduliertes Rechtecksignal sein. Durch entsprechendes Invertieren des jeweiligen Pulssignals Su, Sv, Sw kann das jeweils andere Schaltelement 42 in jeder Schaltbrücke 42' invers geschaltet werden, so dass die Gleichspannungseingänge 34, 36 nicht kurzgeschlossen werden. In FIG 1 ist das Invertieren durch einen entsprechenden Oberstrich über dem jeweiligen Symbol für das Pulssignal Su, Sv, Sw symbolisiert. Ein Pulsgeber 46 kann beispielsweise eine Schaltung, insbesondere eine integrierte Schaltung, zum Erzeugen der Pulssignale sein.

Die Pulsgeber 46 können durch eine zentrale Steuereinrichtung 48 des Wechselrichters 28 gesteuert werden. Durch die Steuereinrichtung 48 kann zum einen ein (nicht dargestelltes) Sollverlaufssignal und zum anderen ein Parameterwert für einen Schalthäufigkeitsparameter 1/Tu, 1/Tv, 1/Tw jedes Pulsgebers 46 eingestellt werden. Durch den aktuellen Wert des Schalthäufigkeitsparameters 1/Tu kann beispielsweise die Periodendauer Tu der Phase U festgelegt sein. Entsprechendes kann für die Schalthäufigkeitsparameter 1/Tv, 1/Tw und die Periodendauern Tv und Tw gelten. Bei der zentralen Steuereinrichtung 48 kann es sich beispielsweise um einen Mikrokontroller handeln.

Die Steuereinrichtung 48 kann mit einer weiteren (nicht dargestellten) übergeordneten Steuervorrichtung, beispielsweise einem Zentralrechner, gekoppelt sein. Durch die Steuereinrichtung 48 kann über den übergeordneten Zentralrechner beispielsweise eine Momentenregelung oder Drehzahlregelung für den Rotor 14 realisiert sein.

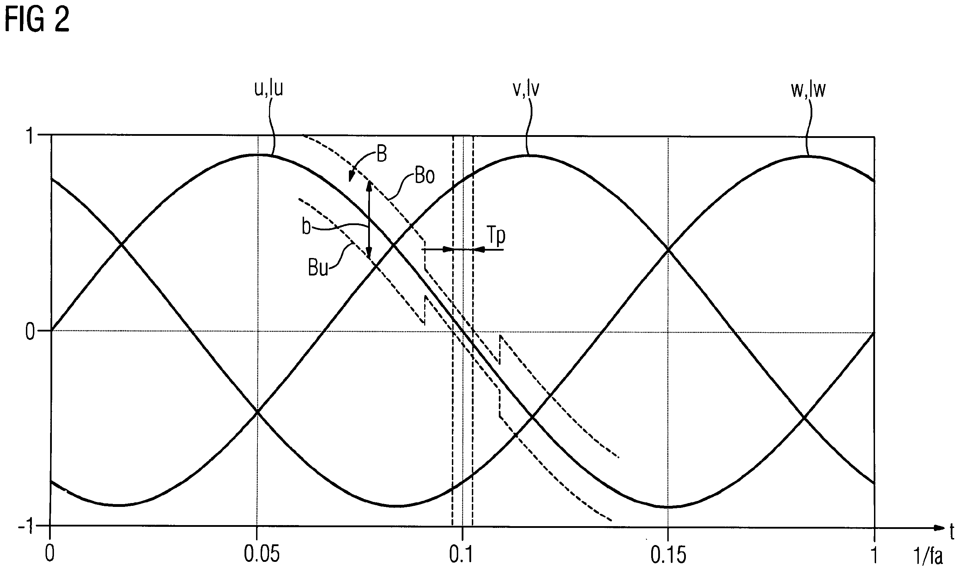

Hierdurch können für die Wechselspannungsausgänge 40 Sollverläufe u, v, w z.B. für Ausgangs-Wechselströme oder Phaseströme Iu, Iv, Iw resultieren. FIG 2 zeigt beispielhaft die Sollverläufe u, v, w über der Zeit t in einer Einheit 1/fa, welche eine Abtastfrequenz für eine digitale Steuerung der elektrischen Maschine zeigt.

Die Ordinate des Diagramms ist auf Werte zwischen -1 und 1 normiert. Der Einfachheit halber sei hier angenommen, dass die tatsächlichen Phaseströme Iu, Iv, Iw mit den Sollverläufen u, v, w übereinstimmen (siehe FIG 2).

Der sinusförmige Verlauf der Ausgangsströme, d.h. der Phasenströme Iu, Iv, Iw, weist in dem in FIG 2 gezeigten Beispiel eine Ausgangsperiodendauer von 200 Millisekunden auf, was einer Frequenz von 5 Hertz entspricht. Der Rotor 14 dreht sich in diesem Betriebsmodus also sehr langsam. Nach dem Stand der Technik würde sich hierdurch ein Temperaturverlauf der Halbleiterchips der Schaltelemente 42 in den einzelnen Phasen ergeben, welcher dem Stromverlauf folgt und je nach Auslegung zum Beispiel 40 K zwischen dem Maximum und dem Minimum der Temperatur der Schaltelemente 42 betragen kann. Dieser Zyklus würde mit einer Frequenz von 5 Hertz auftreten. Nimmt man an, dass die zulässige Anzahl an Temperaturen bei einem Hub von 40 K etwa 10⁶ beträgt, so wäre die Lebensdauer der Halbleiter nach circa 56 Betriebsstunden aufgebraucht.

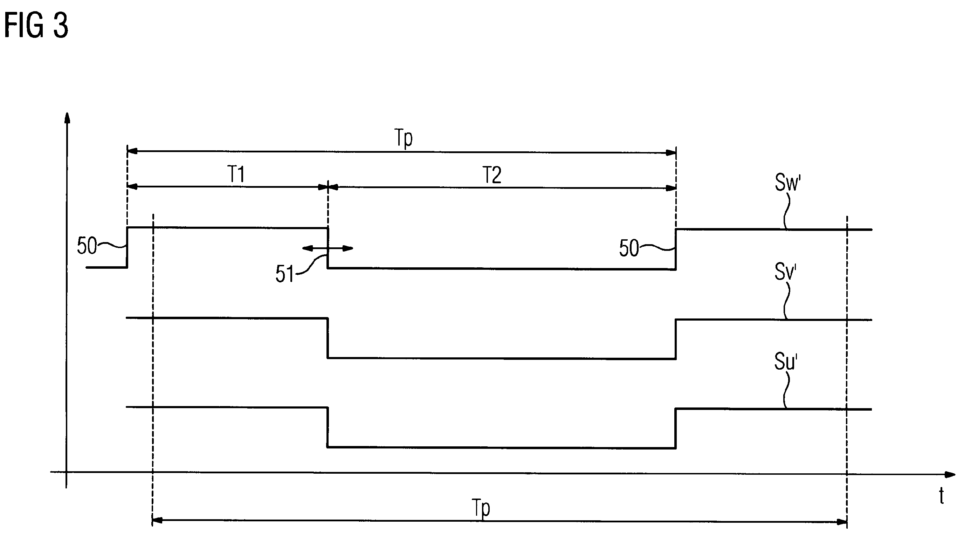

Nach dem Stand der Technik würde nämlich stets das in FIG 3 gezeigte Pulsmuster zum Steuern der Schaltelemente 42 erzeugt. Die Pulsmuster sind hier als Su', Sv', Sw' bezeichnet, wobei sie jeweils den Pulssignalen Su, Sv und Sw in ihrer Funktion entsprechen. In dem Diagramm sind für die drei Pulssignale die Ordinaten jeweils anders skaliert. Entsprechend ist der High-Pegel H und der Low-Pegel L für jedes Pulssignal separat angegeben. Im Stand der Technik würde für alle drei Phasen, das heißt alle Phasenzweige 38, ein pulsweitenmoduliertes Pulssignal erzeugt, dessen Periodendauer Tp konstant wäre. Beispielsweise kann die Periodendauer Tp als zeitlicher Abstand zwischen steigenden Flanken 50 definiert sein. Diese Einteilung ist aber, wie dem Fachmann bekannt ist, willkürlich. Durch Verschieben einer zeitlichen Lage der fallenden Flanke 51 kann ein Verhältnis der High-Pegel-Zeit T1 zu einer Low-Pegel-Zeit T2 erreicht werden. Der sich hieraus ergebende mittlere Spannungswert am Gleichspannungsausgang 40 eines Phasenzweigs 38 über eine Periodendauer Tp kann hierdurch eingestellt werden. Das Einstellen der zeitlichen Position der fallenden Flanke 51 wird durch das genannte Sollverlaufssignal durch die Steuereinrichtung 48 bewirkt.

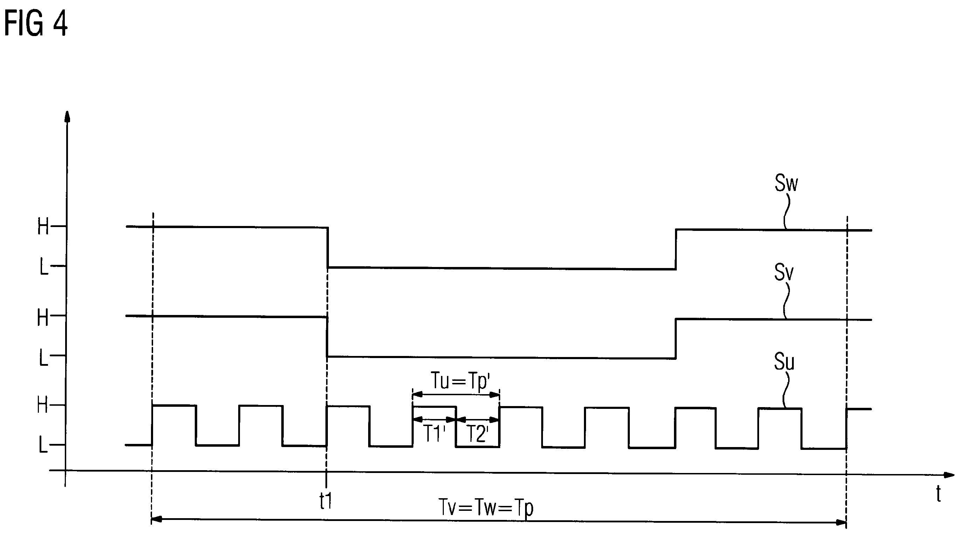

Für die weitere Erläuterung sei angenommen, dass der Ausschnitt der Pulssignale, wie er in FIG 3 und entsprechend auch in FIG 4, FIG 5 und FIG 6 gezeigt ist, den Zeitpunkt t = 0,1 aus der FIG 2 darstellt. In FIG 2 ist hierzu der Anschaulichkeit halber symbolisch dargestellt, welches Verhältnis sich zwischen der Periodendauer Tp zu den Sollverläufen u, v, w ergibt.

Bei der in FIG 1 gezeigten elektrischen Maschine 10 wird die Periodendauer Tp, mit welcher die Pulsgeber 46 die Pulssignale Su, Sv, Sw erzeugen, in Abhängigkeit von der thermischen Belastung der jeweils angesteuerten Schaltelemente 42 eingestellt. Hierzu wird die Schaltfrequenz, also die Periodendauer Tp, in jedem der Phasenzweige 38 an die Höhe des in den Phasenzweig fließenden Phasenstroms Iu, Iv, Iw angepasst. Hierzu wird der jeweilige Schalthäufigkeitsparameter 1/Tu, 1/Tv, 1/Tw z.B. durch die Steuereinrichtung 48 verändert. Ist der Phasenstrom gering, so wird die Pulsfrequenz auf einen großen Wert eingestellt (kleine Periodendauer), während bei großem Phasenstrom mit einer geringen Pulsfrequenz in dem Phasenzweig getaktet wird.

Als Konsequenz dieses Verfahrens arbeitet der Frequenzumrichter 20 in allen Phasen, das heißt in den Phasenzweigen 38, mit unterschiedlichen und lastabhängigen Pulsfrequenzen. Diese erfindungsgemäße Lösung wird im Folgenden noch einmal anhand von FIG 4, FIG 5 und FIG 6 näher erläutert, wobei wieder auf den Zeitpunkt t = 0,1 aus FIG 2 Bezug genommen wird. Zu diesem Zeitpunkt sind die Ströme Iv, Iw verhältnismäßig groß, während der Phasenstrom Iu betragsmäßig verhältnismäßig klein ist, nämlich einen Nulldurchgang aufweist. Bei der beschriebenen kleinen Ausgangsfrequenz von beispielsweise 5 Hertz ist in der Regel die erforderliche Veränderung der Spannung an den Wechselspannungsausgängen 40 über einer Periode der Ausgangsspannung (200ms) verhältnismäßig klein, so dass innerhalb einer Periode die fallende Flanke 51 nur unwesentlich verschoben wird. Im vorliegenden Fall soll aus Gründen der Übersichtlichkeit angenommen werden, dass die fallende Flanke in allen Phasen nicht verschoben wird. Das erfindungsgemäße Verfahren ist jedoch von der Höhe der erforderlichen Ausgangsspannung unabhängig.

Nach der erfindungsgemäßen Lösung wird die Pulsfrequenz in der Phase U, das heißt das Pulssignal Su, erhöht. Mit anderen Worten wird die Pulsdauer Tp' des Pulssignals Su verringert. Hierbei wird aber das Verhältnis aus High-Pegel und Low-Pegel innerhalb einer Periodendauer Tp' nicht verändert, das heißt T1'/T2' = T1/T2. Die Spannungs-Zeitfläche bleibt also unverändert. Es ergibt sich dann innerhalb einer Periodendauer Tp' der gleiche Spannungsmittelwert wie bei unveränderter Periodendauer Tp. Das sich ergebende Pulsmuster ist in FIG 4 dargestellt. Die Periodendauer Tp' kann z.B. F * Tp betragen, wobei F in einem Bereich von 0,01 bis 0,5 liegen kann. Das Verkleinern der Priodendauer kann in einem Phasenzweig 38 z.B. durchgeführt werden, wenn der zugehörige Sollverlauf u, v, w oder Phasenstrom Iu, Iv, Iw betragsmäßig kleiner als ein Grenzwert I0 ist.

Da bei der erfindungsgemäßen Lösung die Schaltfrequenz für die Schaltelemente 42 eines Phasenzweiges 38 zeitweise erhöht wird, sind die Gesamtverluste des Frequenzumrichters in diesem Phasenzweig erhöht. Deshalb sollte vorzugsweise diese Betriebsart zur Reduzierung der Wechsellast erfindungsgemäß von außen am Frequenzumrichter auswählbar sein, beispielsweise über die Steuereinrichtung 48. Beispielsweise sollte dieser Heizmodus nur für eine Ausgangsfrequenz des Sollverlaufs aktiviert werden, wenn die Ausgangsfrequenz kleiner als 5 Hz ist.

In einer vorteilhaften Ausführungsform sollen in dem Wechselrichter 28 als Schaltelemente 42 Halbleitermodule eingesetzt werden, bei denen ein aktiver Schalter und eine Diode als monolythisches Bauelement integriert sind. Derartige Bauteile sind beispielsweise als rückwärts leitfähige IGBTs bekannt. Alternativ können die Bauteile jeweils auch als MOSFETs ausgeführt sein. Diese Lösung bietet den Vorteil, dass die Verluste in dem monolythischen Bauteil zu allen Zeiten unabhängig von der Stromrichtung auftreten.

Sind aktiver Schalter und Diode als getrennte Bauteile aufgeführt, entsteht das Problem, dass ein Halbleiterelement immer nur während einer Polarität der Stromhalbwelle mit Verlusten beaufschlagt wird. Während der Stromhalbwelle anderer Polarität sind die Verluste zwangsweise 0 und können auch nicht durch Schaltfrequenz erhöht werden. Eine Vergleichsmäßigung der Verluste ist dann nur während der für den Halbleiterverlust erzeugenden Stromhalbwelle möglich. Dem kann durch eine thermische Kopplung des Schalters mit der Diode abgeholfen werden.

Die Pulsgeber 46 stellen jeweils einen Modulator oder ein Modulatorteil mit eigener Pulserzeugungseinheit 52 dar. Durch die jeweilige Pulserzeugungseinheit 52 wird das jeweilige Pulssignal Su, Sv, Sw erzeugt.

Jeder Modulator kann auch als Toleranzbandregler zur Anwendung einer Toleranzbandregelung ausgelegt sein. Hierzu ist in FIG 2 für die Phase U veranschaulicht, wie um dem Sollverlauf u ein Toleranzband B mit einer oberen Toleranzbandgrenze Bo und einer unteren Toleranzbandgrenze Bu festgelegt sein kann. Eine Intervallbreite der Toleranzbandgrenzen Bo, Bu bildet zu einem gegebenen Zeitpunkt t eine Toleranzband-Breite oder kurz Breite b. Wird ein Umrichter mit Toleranzbandregelung eingesetzt, so kann erfindungsgemäß die Pulsfrequenz bei kleinem Strom oder geringer Temperatur dadurch erhöht werden, dass bei kleinem Strom oder geringer Chiptemperatur der Schaltelemente 42 die Breite b des Toleranzbandes B reduziert wird. Ein schmaleres Toleranzband B führt zu einer erhöhten Schaltfrequenz und damit zu höheren Schaltverlusten. Das Toleranzband B wird solange verkleinert, bis die gewünschte Chiptemperatur erreicht ist. Erfindungsgemäß wird damit die Breite b des Toleranzbandes B in den drei Phasen U, V, W des Frequenzumrichters 20 unterschiedlich. Bei Toleranzbandregelung wird der Frequenzumrichter 20 somit mit einer phasenindividuellen und phasenlastabhängigen Toleranzband-Breite b betrieben.

Mit den erfindungsgemäßen Verfahren kann das Problem auftreten, dass möglicherweise Zeitpunkte auftreten, an denen zwei der Phasenzweige 38 gleichzeitig in unterschiedliche Richtungen schalten. Dies ist in der FIG 4 für einen Zeitpunkt t1 gezeigt, in dem die Phasen V und W nach unten schalten und gleichzeitig die Phase U nach oben schaltet. Ein solches Ereignis führt zu einer erhöhten Spannungsbelastung an einem angeschlossenen Motor, das heißt in den Wicklungen 16.

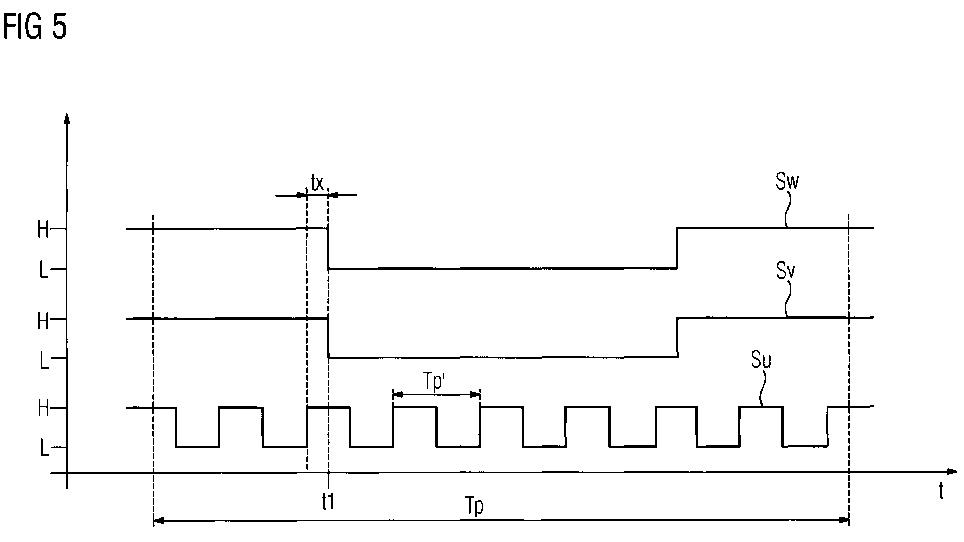

Um diese Doppelübergänge zu vermeiden, wird erfindungsgemäß bevorzugt der eigentlichen Pulserzeugungseinheit 52 eines jeden Pulsgebers 46 eine Überprüfungseinheit 54 nachgeschaltet, der die Ausgangsspannungen auf Doppelübergänge überprüft und im Bedarfsfalle die Signale um eine Zeit tx verschiebt, wie dies in FIG 5 veranschaulicht ist.

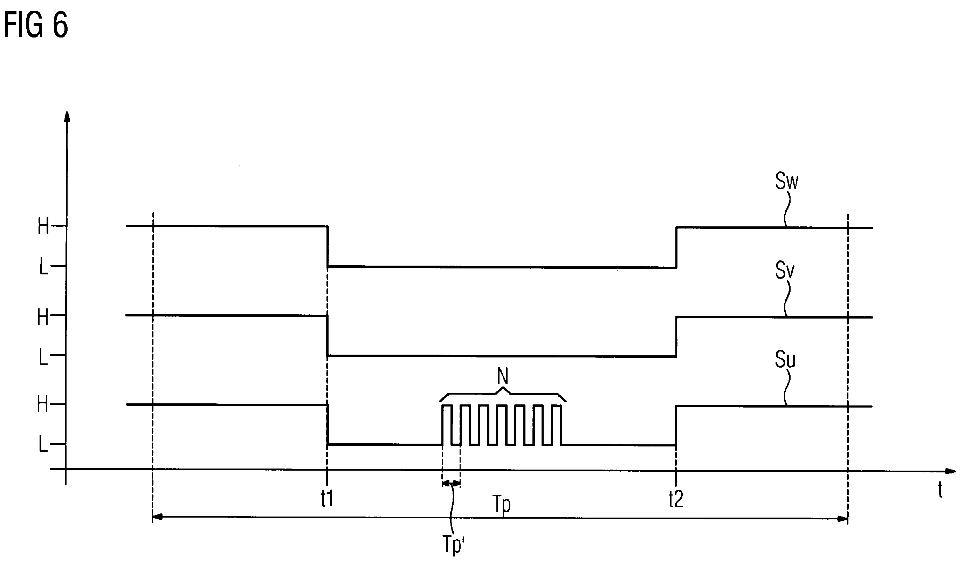

Eine weitere Möglichkeit zur Vermeidung von Doppelübergängen ist in FIG 6 veranschaulicht. Bei dieser Ausführungsform des erfindungsgemäßen Verfahrens werden auch Rippleströme im Stator 12 wirkungsvoll verringert. In FIG 4 des Anmeldungsentwurfes ist gezeigt, dass die Pulsperiode Tp' in der Phase U gegenüber der Pulsperiode Tp in den Phasen V und W gleichmäßig erhöht wird. Mit der Frequenz 1/Tp' fließen unerwünschte Rippleströme im Stator, die diesen erwärmen. Die unerwünschten Ströme sind proportional zur Periodendauer Tp'. Deshalb ist es wünschenswert, die Zeitdauer, während welcher auf die Periodendauer Tp' umgeschaltet wird, so kurz wie möglich zu gestalten. Gemäß einer Ausführungsform der Erfindung wird deshalb die Periodendauer Tp' sehr viel kürzer als die Periodendauer Tp gewählt, z.B. Tp' < Tp/50. Um dennoch die Temperaturerhöhung in Phase U kontrollieren zu können, wird diese kurze Periodendauer Tp' nur solange verwendet, bis die zur gewünschten Temperaturerhöhung erforderliche Anzahl von N Pulsen realisiert ist. Damit ergibt sich ein Verlauf des Pulssignals Su, wie er in FIG 6 gezeigt ist. Um die Gefahr von Doppelpulsen zu vermeiden, ist es auch vorteilhaft, die Pulse in einem Zeitraum zu realisieren, der Abstand zu den Schaltzeitpunkten t1 und t2 der Phasen V und W hat. Werden die Zusatzpulse, wie in FIG 6 geigt, alle während eines Zeitraumes realisiert, in welchem das ursprüngliche, sich bei unverändertem Schalthäufigkeitsparameter 1/Tu ergebende Pulssignal Su der Phase U gleich null ist (Low-Pegel), so ergibt sich während des Zeitraumes der hochfrequenten Pulse (Tu=Tp') eine andere Spannungs-Zeit-Fläche ungleich null, die zu einem Spannungszeit-Flächen-Fehler führt. Dieser kann vom Modulator 46 der Phase U erfindungsgemäß auf zwei Arten verhindert werden:
a) Die Hälfte der Pulse (N/2) wird in einem Zeitraum realisiert, in dem das ursprünglich Pulssignal Su gleich null ist (Low-Pegel), und die zweite Hälfte der Pulse (N/2) wird in einem Zeitraum realisiert, in dem das ursprüngliche Steuersignal gleich eins ist (High-Pegel), oder
b) Die ursprünglichen Schaltzeitpunkte t1 und t2 der zu heizenden Phase, hier der Phase U, werden derart (im Fall von FIG 6 nach außen) verschoben, dass die Änderung in der Spannungs-Zeit-Fläche kompensiert wird.

So wird insbesondere im PWM-Betrieb wird der Ripplestrom im Motor reduziert, indem in einem kurzen Zeitraum die verlusterzeugenden Zusatzpulse mit hoher Schaltfrequenz realisiert werden.

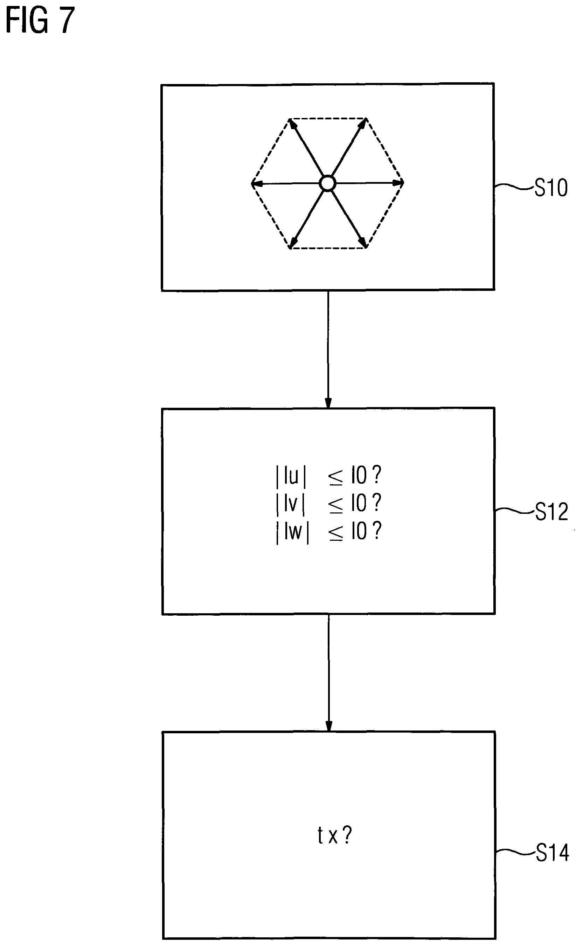

In dem Pulsgeber 46 eines jeden Phasenzweiges 38 läuft somit insgesamt das in FIG 7 veranschaulichte Verfahren zur Pulserzeugung der jeweiligen Pulssignale Su, Sv, Sw wie folgt ab:

In einen Schritt S10 erfolgt die Berechnung der Zeigerfolge bei standardmäßiger Pulsfrequenz, also das Ermitteln der für die jeweils aktuelle Drehlage des magnetischen Drehfelds im Stator 12 nötigen Schaltzustände der Schaltelemente 42. Eine andere Bezeichnung für Zeigerfolge ist in diesem Zusammenhang auch der englische Begriff Voltage-Vektor. Dieses Konzept ist an sich aus dem Stand der Technik bekannt und kann vom Fachmann dort der einschlägigen Literatur entnommen werden.

In einem zweiten Schritt S12 erfolgt die Pulsfrequenzerhöhung in einzelnen Ausgangsphasen entsprechend des Werts des Phasenstromes. Es kann beispielsweise ein Schwellenwert I0 festgelegt werden und die Erhöhung der Pulsfrequenz, das heißt die Verringerung der jeweiligen Pulsdauer Tu, Tv, Tw erfolgen, wenn der jeweilige Phasenstrom Iu, Iv, Iw betragsmäßig kleiner oder gleich dem Schwellenwert I0 ist. In einem Schritt S14 erfolgt dann die Kontrolle auf Doppelübergänge und bei Bedarf eine Verschiebung der Zeigerfolge einzelner Phasen beispielsweise um den beschriebenen Betrag tx.

Durch die Erfindung ist ermöglicht, dass die Pulsfrequenz in einzelnen Phasenzweigen an den Phasenstrom Iu, Iv, Iw angepasst wird und somit in einzelnen Phasen des Wechselrichters 28 unterschiedliche Pulsfrequenzen für die pulsweitenmodulierte Steuerung mittels Pulssignalen Su, Sv, Sw realisiert wird.

Durch die erfindungsgemäße Lösung können Temperaturhübe in Leistungshalbleiterchips von Schaltelementen 42 reduziert werden. Umrichterausfälle während des Betriebs können so vermieden werden beziehungsweise eine starke Überdimensionierung der Leistungshalbleiter der Schaltelemente 42 und damit ein starker Anstieg der Materialkosten kann mit dieser Lösung vermieden werden.

Die Schutzwirkung geht über den Anwendungsfall einer Vergleichmäßigung der Temperatur in den Halbleiterchips hinaus. Die Verwendung unterschiedlicher Pulsfrequenzen in drei Phasen eines Frequenzumrichters kann auch für weitere Anwendungsfälle vorteilhaft sein. Beispielsweise kann die Pulsfrequenz verringert werden, wenn die Sollwertverläufe u, v, w besonders flach verlaufen, wie dies bei sinusförmigen Verläufen im Bereich der Maxima und Minima der Fall ist. Hierdurch kann eine Schalthäufigkeit in diesen Bereichen verringert werden.

## Patentansprüche

1. Verfahren zum Steuern eines Wechselrichters (28), der zwei Gleichspannungseingänge (34,36) und zumindest zwei Phasenzweige (38) aufweist, wobei jeder Phasenzweig (38) einen Wechselspannungsausgang (40), eine Schaltbrücke (42'), die zum abwechselnden elektrischen Koppeln des Wechselspannungsausgangs (40) mit den Gleichspannungseingängen (34, 36) ausgelegt ist, sowie einen Modulator (46) zum Steuern der Schaltbrücke (42') mittels eines Pulssignals (Su, Sv, Sw) umfasst, **dadurch gekennzeichnet, dass** jeder Modulator (46) im Betrieb des Wechselrichters (28) eine Schalthäufigkeit seines Pulssignals (Su, Sv, Sw) unabhängig von jedem anderen Modulator (46) und in Abhängigkeit von einem Schalthäufigkeitsparameter (1/Tu, 1/Tv, 1/Tw) einstellt.

2. Verfahren nach Anspruch 1, wobei in jedem Phasenzweig (38) der Modulator (46) als Pulsgeber (46) ausgelegt ist und bei dem Verfahren in jedem Phasenzweig (38) dessen Schaltbrücke (42') durch den Pulsgeber (46) mit einem Pulssignal (Su, Sv, Sw) geschaltet wird und durch den Pulsgeber (46) das Pulssignal (Su, Sv, Sw) mit einer bestimmten Periodendauer (Tu, Tv, Tw) und innerhalb jeder Periodendauer (Tu, Tv, Tw) mit einem bestimmten Pulsverhältnis (T1/T2) von High-Pegel (H) und Low-Pegel (L) erzeugt wird und das Pulsverhältnis (T1/T2) in Abhängigkeit von einem Sollverlaufssignal eingestellt wird, **dadurch gekennzeichnet, dass** bei allen Pulsgebern (46) die Periodendauer (Tu, Tv, Tw) in Abhängigkeit von dem jeweiligen im Betrieb veränderbar ausgestalteten Schalthäufigkeitsparameter (1/Tu, 1/Tv, 1/Tw) zum Festlegen der Periodendauer (Tu, Tv, Tw) und damit unabhängig von jedem anderen Pulsgeber (46) eingestellt wird.

3. Verfahren nach Anspruch 1, wobei in jedem Phasenzweig (38) der Modulator (46) als Toleranzbandregler (46) ausgelegt ist und bei dem Verfahren in jedem Phasenzweig (38) dessen Schaltbrücke (42') durch den Toleranzbandregler (46) mittels eines Pulssignals (Su, Sv, Sw) geschaltet wird, durch welches die Schaltbrücke (42') immer dann umgeschaltet wird, wenn ein Ausgangs-Wechselstrom (Iu, Iv, Iw) am Wechselspannungsausgang (40) ein Toleranzband (B) verlässt, das um einen durch ein Sollverlaufssignals vorgegebenen Sollverlauf des Ausgangs-Wechselstroms (Iu, Iv, Iw) festgelegt ist und das eine Toleranzband-Breite (b) aufweist, **dadurch gekennzeichnet , dass** bei allen Toleranzbandreglern (46) die Toleranzband-Breite (b) in Abhängigkeit von dem jeweiligen im Betrieb veränderbar ausgestalteten Schalthäufigkeitsparameter (1/Tu, 1/Tv, 1/Tw) zum Festlegen der Toleranzband-Breite (b) und damit unabhängig von jedem anderen der Toleranzbandregler (46) eingestellt wird.

4. Verfahren nach Anspruch 2 oder 3, wobei bei jedem Phasenzweig (38) der Schalthäufigkeitsparameter (1/Tu, 1/Tv, 1/Tw) auch unabhängig von dem Sollverlaufssignal eingestellt wird.

5. Verfahren nach einem der vorhergehenden Ansprüche, wobei sich innerhalb eines vorbestimmten Zeitintervalls durch unterschiedliche Werte der Schalthäufigkeitsparameter (1/Tu, 1/Tv, 1/Tw) bei den Phasenzweigen (38) unterschiedliche Schalthäufigkeiten der Schaltbrücken (38) ergeben.

6. Verfahren nach einem der vorhergehenden Ansprüche, wobei in jedem Phasenzweig (38) jeweils der Schalthäufigkeitsparameter (1/Tu, 1/Tv, 1/Tw) in Abhängigkeit von einem Gradienten eines Sollverlaufs (u, v, w) der Wechselspannung und/oder des Ausgangs-Wechselstroms (Iu, Iv, Iw) für den jeweiligen Wechselspannungsausgang (40) eingestellt wird.

7. Verfahren nach einem der vorhergehenden Ansprüche, wobei in jedem Phasenzweig (38) jeweils der Schalthäufigkeitsparameter (1/Tu, 1/Tv, 1/Tw) in Abhängigkeit einer Temperatur zumindest eines Schaltelements (42) der Schaltbrücke (42') eingestellt wird.

8. Verfahren nach einem der vorhergehenden Ansprüche, wobei in jedem Phasenzweig (38) jeweils der Schalthäufigkeitsparameter (1/Tu, 1/Tv, 1/Tw) in Abhängigkeit von einer Stromstärke eines Ausgangs-Wechselstroms (Iu, Iv, Iw) in dem Phasenzweig (38) eingestellt wird.

9. Verfahren nach einem der vorhergehenden Ansprüche, wobei in jedem Phasenzweig (38) jeweils der Schalthäufigkeitsparameter (1/Tu, 1/Tv, 1/Tw) in Abhängigkeit von einer Sollfrequenz für die am Wechselspannungsausgang (40) zu erzeugende Wechselspannung und/oder den am Wechselspannungsausgang zu erzeugenden Ausgangs-Wechselstrom (Iu, Iv, Iw) eingestellt wird, indem der Schalthäufigkeitsparameter (1/Tu, 1/Tv, 1/Tw) nur verändert wird, falls die Sollfrequenz kleiner als eine vorbestimmte Höchstfrequenz ist.

10. Verfahren nach einem der vorhergehenden Ansprüche, wobei eine Überprüfungseinheit (54) die Steuersignale (Su, Sv, Sw) derart gegeneinander zeitlich verschiebt, dass zwischen Polaritätswechseln mit unterschiedlichen Vorzeichen eine vorbestimmte Mindestzeit (tx) liegt.

11. Verfahren nach einem der vorhergehenden Ansprüche, wobei in einem Phasenzweig (38) für einen aktuellen Wert von dessen Schalthäufigkeitsparameter (1/Tu, 1/Tv, 1/Tw) für das sich ergebende Pulssignal eine Spannungs-Zeit-Fläche, die sich durch ein Pulsverhältnis (T1/T2) von aufeinanderfolgendem High-Pegel (H) und Low-Pegel (L) ergibt, ermittelt wird und, um zusätzliche Schaltereignisse bei der Schaltbrücke (42') zu bewirken, der Schalthäufigkeitsparameter (1/Tu, 1/Tv, 1/Tw) derart verändert wird, dass die Spannungs-Zeit-Fläche des Pulssignals unverändert bleibt.

12. Verfahren nach einem der vorhergehenden Ansprüche, wobei in einem Phasenzweig (38) zum Heizen eines Schalters seiner Schaltbrücke (42') eine Anzahl (N) von zusätzlichen, zu einem ursprünglich Pulssignal hinzuzufügenden Schaltpulsen ermittelt wird und
a) ein erster Anteil (N/2) der zusätzlichen Schaltpulse in einem Zeitraum realisiert wird, in welchem das ursprüngliche Pulssignal (Su) einen Low-Pegel aufweist, und der verbleibende Anteil (N/2) der zusätzlichen Schaltpulse in einem Zeitraum realisiert wird, in welchem das ursprüngliche Steuersignal (Su) einen High-Pegel aufweist, und/oder
b) ursprüngliche Schaltzeitpunkte (t1, t2) des ursprünglichen Pulssignals (Su) derart verschoben werden, dass sich bei einem durch das Hinzufügen der zusätzlichen Schaltpulse zum ursprünglichen Pulssignal ergebenden Schaltsignal eine Spannungs-Zeit-Fläche ergibt, die gleich einer Spannungs-Zeit-Fläche des ursprünglichen Pulssignals ist.

13. Wechselrichter (28), der zwei Gleichspannungseingänge (34, 36) und zumindest zwei Phasenzweige (38) aufweist, wobei jeder Phasenzweig (38) einen Wechselspannungsausgang (40), eine Schaltbrücke (42') zum abwechselnden elektrischen Koppeln des Wechselspannungsausgangs (40) mit den Gleichspannungseingängen (34, 36) und
einem Modulator (46) zum Steuern der Schaltbrücke (42') mittels eines Pulssignals (Su, Sv, Sw) aufweist, wobei der Modulator (46) dazu ausgestaltet ist, das Pulssignal (Su, Sv, Sw)
a) als Pulsgeber (46) mit einer vorbestimmten Periodendauer (Tu, Tv, Tw) oder
b) als Toleranzbandregler (46) zu erzeugen,
**dadurch gekennzeichnet, dass** der Wechselrichter dazu ausgestaltet ist, ein Verfahren nach einem der vorhergehenden Ansprüche durchzuführen.

14. Wechselrichter (28) nach Anspruch 13, wobei eine oder mehrere oder jede der Schaltbrücken (38) jeweils zumindest ein Halbleitermodul als Schaltelement (42) aufweist, das einen aktiven Schalter, dessen Steuereingang mit dem Modulator (46) gekoppelt ist, und eine Freilaufdiode aufweist, wobei der aktive Schalter und die Freilaufdiode als monolythisches Bauelement ausgebildet sind.

15. Wechselrichter (28) nach einem der Ansprüche 13 oder 14, wobei bei einer oder mehreren oder jeder der Schaltbrücken (42') jeweils ein aktiver Schalter und eine zugehörige Freilaufdiode als getrennte Bauteile ausgeführt sind, die durch ein Wärmeleitelement thermisch gekoppelt sind, wobei das Wärmeleitelement eine Wärmeleitfähigkeit von mindestens 4 W/(m * K), insbesondere mindestens 20 W/(m*K), bevorzugt mindestens 40 W/(m*K), aufweist.

16. Frequenzumrichter (20) mit einer Einspeiseeinheit (24), einem mit dieser gekoppelten Gleichspannungs-Zwischenkreis (26) und einem mit diesem gekoppelten Wechselrichter (28), wobei die Einspeiseeinheit (24) dazu ausgelegt ist, in dem Zwischenkreis (26) aus einer Wechselspannung eines Versorgungsnetzes (22) eine Gleichspannung (U) zu erzeugen, **dadurch gekennzeichnet, dass** der Wechselrichter (28) nach einem der Ansprüche 13 bis 15 ausgestaltet ist.

17. Elektrische Maschine (10) mit einem Stator (12) und einem Rotor (14) und einem Wechselrichter (38) nach einem der Ansprüche 13 bis 15, wobei der Wechselrichter (38) dazu ausgelegt ist, elektrische Wicklungen (16) des Stators (12) abwechselnd mit einem Strom (Iu, Iv, Iw) aus einem Gleichspannungs-Zwischenkreis (26) zu bestromen.

## Claims

1. Method for controlling an inverter (28) having two direct voltage inputs (34, 36) and at least two phase branches (38), wherein each phase branch (38) comprises an alternating voltage output (40), a switching bridge (42'), which is designed to alternately electrically couple the alternating voltage output (40) to the direct voltage inputs (34, 36), and a modulator (46) for controlling the switching bridge (42') by means of a pulse signal (Su, Sv, Sw), **characterised in that** during operation of the inverter (38) each modulator (46) adjusts a frequency of operation of its pulse signal (Su, Sv, Sw) independently of each other modulator (46) and as a function of a frequency of operation parameter (1/Tu, 1/Tv, 1/Tw).

2. Method according to claim 1, wherein in each phase branch (38) the modulator (46) is designed as a pulse generator (46) and with the method in each phase branch (38), the switching bridge (42') of which is connected to a pulse signal (Su, Sv, Sw) by the pulse generator (46), and by means of the pulse generator (46), the pulse signal (Su, Sv, Sw) is generated with a specific period (Tu, Tv, Tw) and within each period (Tu, Tv, Tw) with a specific pulse ratio (T1/T2) of high level (H) and low level (L) and the pulse ratio (T1/T2) is adjusted as a function of a desired course signal,
**characterised in that** with all pulse generators (46), the period (Tu, Tv, Tw) is adjusted as a function of the respective frequency of operation parameter (1/Tu, 1/Tv, 1/Tw) designed to be variable during operation in order to define the period (Tu, Tv, Tw), and thus independently of each other pulse generator (46).

3. Method according to claim 1, wherein in each phase branch (38) the modulator (46) is designed as a tolerance band regulator (46) and with the method in each phase branch (38), the switching bridge (42') of which is connected by the tolerance band regulator (46) by means of a pulse signal (Su, Sv, Sw), by means of which the switching bridge (42') is then always switched over, if an output alternating current (Iu, Iv, Iw) at the alternating voltage output (40) leaves a tolerance band (B) which is defined about a desired course of the output alternating current (Iu, Iv, Iw) predetermined by a desired course signal and which has a tolerance band width (b), **characterised in that** with all tolerance band regulators (46), the tolerance band width (b) is adjusted as a function of the respective frequency of operation parameter (1/Tu, 1/Tv, 1/Tw) designed to be variable during operation in order to define the tolerance band width (b) and thus independently of each other tolerance band regulator (46).

4. Method according to claim 2 or 3, wherein with each phase branch (38), the frequency of operation parameter (1/Tu, 1/Tv, 1/Tw) is also adjusted independently of the desired course signal.

5. Method according to one of the preceding claims, wherein in the phase branches (38) different frequencies of operation of the switching bridge (38) result within a predetermined time interval on account of different values of the frequency of operation parameters (1/Tu, 1/Tv, 1/Tw).

6. Method according to one of the preceding claims, wherein in each phase branch (38), the frequency of operation parameter (1/Tu, 1/Tv, 1/Tw) is adjusted in each case as a function of a gradient of a desired course (u, v, w) of the alternating voltage and/or of the output alternating current (Iu, Iv, Iw) for the respective alternating voltage output (40).

7. Method according to one of the preceding claims, wherein in each phase branch (38) the frequency of operation parameter (1/Tu, 1/Tv, 1/Tw) is adjusted in each case as a function of a temperature of at least one switching element (42) in the switching bridge (42').

8. Method according to one of the preceding claims, wherein in each phase branch (38) the frequency of operation parameter (1/Tu, 1/Tv, 1/Tw) is adjusted in each case as a function of a current strength of an output alternating current (Iu, Iv, Iw) in the phase branch (38).

9. Method according to one of the preceding claims, wherein in each phase branch (38) the frequency of operation parameter (1/Tu, 1/Tv, 1/Tw) is adjusted in each case as a function of a desired frequency for the alternating voltage to be generated at the alternating voltage output (40) and/or the output alternating current (Iu, Iv, Iw) to be generated at the alternating voltage output, by the frequency of operation parameter (1/Tu, 1/Tv, 1/Tw) only being changed if the desired frequency is less than a predetermined highest frequency.

10. Method according to one of the preceding claims, wherein a monitoring unit (54) temporally offsets the control signals (Su, Sv, Sw) relative to one another such that a predetermined minimum time (tx) lies between polarity changes with different leading signs.

11. Method according to one of the preceding claims, wherein a voltage time area, which results due to a pulse ratio (T1/T2) of consecutive high level (H) and low level (L), is determined in a phase branch (38) for a current value of its frequency of operation parameter (1/Tu, 1/Tv, 1/Tw) for the resulting pulse signal and in order to effect additional switching events in the switching bridge (42'), the frequency of operation parameter (1/Tu, 1/Tv, 1/Tw) is changed such that the voltage time area of the pulse signal remains unchanged.

12. Method according to one of the preceding claims, wherein a number (N) of additional switching pulses to be added to an original pulse signal is determined in a phase branch (38) in order to heat a switch in its switching bridge (42'), and
a) a first portion (N/2) of the additional switching pulses is realised in a time frame in which the original pulse signal (Su) has a low level and the remaining portion (N/2) of the additional switching pulses is realised in a time frame in which the original control signal (Su) has a high level, and/or
b) original switching times (t1, t2) of the original pulse signal (Su) are offset such that, with a switching signal resulting by adding the additional switching pulses to the original pulse signal, a voltage time area results which equates to a voltage time area of the original pulse signal.

13. Inverter (28) having two direct voltage inputs (34, 36) and at least two phase branches (38), wherein each phase branch (38) has an alternating voltage output (40), a switching bridge (42') to alternately electrically couple the alternating voltage output (40) to the direct voltage inputs (34, 36) and
a modulator (46) for controlling the switching bridge (42') by means of a pulse signal (Su, Sv, Sw), wherein the modulator (46) is configured to generate the pulse signal (Su, Sv, Sw)
a) as a pulse generator (46) with a predetermined period (Tu, Tv, Tw) or
b) as a tolerance band regulator (46),
**characterised in that** the inverter is designed to implement a method according to one of the preceding claims.

14. Inverter (28) according to claim 13, wherein one or a number or each of the switching bridges (38) has in each case at least one semiconductor module as a switching element (42), which has an active switch, the control input of which is coupled to the modulator (46), and a freewheeling diode, wherein the active switch and the freewheeling diode are embodied as a monolithic component.

15. Inverter (28) according to one of claims 13 or 14, wherein with one or a number or each of the switching bridges (42') an active switch and an associated freewheeling diode are in each case embodied as separate components, which are thermally coupled by a heat-conducting element, wherein the heat-conducting element has a heat-conducting ability of at least 4 W/(m*K), in particular at least 20 W/(m*K), preferably at least 40 W/(m*K).

16. Frequency converter (20) with a feed unit (24), a direct voltage intermediate circuit (26) coupled hereto and an inverter (28) coupled hereto, wherein the feed unit (24) is designed to generate a direct voltage (U) in the intermediate circuit (26) from an alternating voltage of a power supply (22), **characterised in that** the inverter (28) is embodied according to one of claims 13 to 15.

17. Electric machine (10) having a stator (12) and a rotor (14) and an inverter (38) according to one of claims 13 to 15, wherein the inverter (38) is designed to supply electrical windings (16) of the stator (12) alternately with a current (Iu, Iv, Iw) from a direct voltage intermediate circuit (26).

## Revendications

1. Procédé de commande d'un onduleur ( 28 ) qui a deux entrées ( 34, 36 ) de la tension continue et au moins deux branches ( 38 ) de phase, chaque branche ( 38 ) de phase comprenant une sortie ( 40 ) de tension alternative, un pont ( 42' ) de commutation conçu pour le couplage électrique alterné de la sortie ( 40 ) de la tension alternative avec les entrées ( 34, 36 ) de la tension continue, ainsi qu'un modulateur ( 46 ) pour commander le pont ( 42' ) de commutation au moyen d'un signal ( Su, Sv, Sw ) à impulsion, **caractérisé en ce que** chaque modulateur ( 46 ) règle, lorsque l'onduleur ( 28 ) est en fonctionnement, une fréquence de commutation de son signal ( Su, Sv, Sw ) à impulsions indépendamment de chaque autre modulateur ( 46 ) et en fonction d'un paramètre ( 1/Tu, 1/Tv, Tw ) de fréquence de commutation.

2. Procédé suivant la revendication 1, dans lequel, dans chaque branche ( 38 ) de phase, le modulateur ( 46 ) est conçu sous la forme d'un émetteur ( 46 ) d'impulsions et dans le procédé on met en circuit dans chaque branche ( 38 ) de phase son pont ( 42' ) de commutation par l'émetteur ( 46 ) d'impulsions par un signal ( Su, Sv, Sw ) à impulsion, et on produit par l'émetteur ( 46 ) d'impulsions le signal ( Su, Sv, Sw ) à impulsion à une période ( Tu, Tv, Tw ) définie et, dans chaque période ( Tu, Tv, Tw ), à un rapport ( T1/T2 ) d'impulsion défini de niveau ( H ) haut et de niveau ( L ) bas, et on règle le rapport ( T1/T2 ) d'impulsion en fonction d'un signal de courbe de consigne, **caractérisé en ce que** l'on règle pour tous les émetteurs ( 46 ) d'impulsions la période ( Tu, Tv, Tw ) en fonction du paramètre ( 1/Tu, 1Tv, 1/Tw ) de fréquence de commutation pouvant se modifier en fonctionnement pour fixer la période ( Tu, Tv, Tw ) et ainsi indépendamment de chaque autre émetteur ( 46 ) d'impulsion.

3. Procédé suivant la revendication 1, dans lequel, dans chaque branche ( 38 ) de phase, le modulateur ( 46 ) est conçu sous la forme d'un régleur ( 46 ) de bande de tolérance et dans le procédé, on met en circuit, dans chaque branche ( 38 ) de phase, son pont ( 42' ) de commutateur par le régleur ( 46 ) de bande de tolérance au moyen d'un signal ( Su, Sv, Sw ) à impulsion, par lequel le pont ( 42' ) de commutation est toujours commuté lorsqu'un courant ( Iu, Iv, Iw ) alternatif de sortie, à la sortie ( 40 ) de la tension alternative, quitte une bande ( B ) de tolérance, qui est fixée autour d'une courbe de consigne, donnée à l'avance par un signal de courbe de consigne, du courant ( Iu, Iv, Iw ) alternatif de sortie et qui a une largeur ( b ) de bande de tolérance **caractérisé en ce que**, pour tous les régleurs ( 46 ) de bande de tolérance, on règle la largeur ( b ) de bande de tolérance en fonction du paramètre ( 1/Tu, 1/Tv, 1/Tw ) de fréquence de commutation pouvant être modifié en fonctionnement pour fixer la largeur de la bande de tolérance et ainsi indépendamment de chacun des autres régleurs ( 46 ) de bande de tolérance.

4. Procédé suivant la revendication 2 ou 3, dans lequel, pour chaque branche ( 38 ) de phase, on règle les paramètres ( 1/Tu, 1/Tv, 1/Tw ) de fréquence de commutation également indépendamment du signal de courbe de consigne.

5. Procédé suivant l'une des revendications précédentes, dans lequel, à l'intérieur d'un intervalle de temps défini à l'avance par des valeurs différentes des paramètres ( 1/Tu, 1/Tv, 1/Tw ) de fréquence de commutation, on obtient dans les branches ( 38 ) de phase des fréquences de commutation différentes des ponts ( 38 ) de commutation.

6. Procédé suivant l'une des revendications précédentes, dans lequel, dans chaque branche ( 38 ) de phase, on règle respectivement le paramètre ( 1/Tu, 1/Tv, 1/Tw ) de fréquence de commutation en fonction d'un gradient d'une courbe ( u, v, w ) de consigne de la tension alternative et/ou du courant ( Iu, Iv, Iw ) alternatif de sortie pour la sortie ( 40 ) respective de la tension alternative.

7. Procédé suivant l'une des revendications précédentes, dans lequel, dans chaque branche ( 38 ) de phase, on règle respectivement le paramètre ( 1/Tu, 1/Tv, 1/Tw ) de fréquence de commutation en fonction d'une température d'au moins un élément ( 42 ) de commutation du pont ( 42' ) de commutation.

8. Procédé suivant l'une des revendications précédentes, dans lequel, dans chaque branche ( 38 ) de phase, on règle respectivement le paramètre ( 1/Tu, 1/Tv, 1/Tw ) de fréquence de commutation en fonction d'une intensité du courant ( Iu, Iv, Iw ) alternatif de sortie dans la branche ( 38 ) de phase.

9. Procédé suivant l'une des revendications précédentes, dans lequel, dans chaque branche ( 38 ) de phase, on règle respectivement le paramètre ( 1/tu, 1/Tv, 1/Tw ) de fréquence de commutation en fonction d'une fréquence de consigne de la tension alternative à produire à la sortie ( 40 ) de la tension alternative et/ou du courant ( Iu, Iv, Iw ) alternatif de sortie à produire à la sortie de la tension alternative, en modifiant le paramètre ( 1/Tu, 1/Tv, 1/Tw ) de fréquence de commutation seulement si la fréquence de consigne est plus petite qu'une fréquence très grande définie à l'avance.

10. Procédé suivant l'une des revendications précédentes, dans lequel, une unité ( 54 ) de contrôle décale dans le temps les uns par rapport aux autres les signaux ( Su, Sv, Sw ) de commande de manière à avoir un temps ( tx ) minimum défini à l'avance entre des changements de polarité ayant des signes différents.

11. Procédé suivant l'une des revendications précédentes, dans lequel, dans une branche ( 38 ) de phase, on détermine, pour une valeur présente de son paramètre ( 1/tu, 1/Tv, 1/Tw ) de fréquence de commutation, pour le signal à impulsion en résultant une surface tension-temps qui provient d'un rapport ( T1/T2 ) d'impulsion de niveau ( H ) haut et de niveau ( L ) bas se succédant et, pour provoquer des événements de commutation supplémentaires dans le pont ( 42' ) de commutation, on modifie le paramètre ( 1/Tu, 1/Tv, 1/Tw ) de fréquence de commutation de manière à ce que la surface tension-temps du signal à impulsion reste inchangée.

12. procédé suivant l'une des revendications précédentes, dans lequel, dans une branche ( 38 ) de phase, on détermine, pour le chauffage d'un commutateur de son pont ( 42' ) de commutation, un nombre ( N ) d'impulsions de commutation supplémentaires à ajouter à un signal à impulsion d'origine et
a) on réalise une première proportion ( N/2 ) des impulsions de commutation supplémentaires dans un laps de temps dans lequel le signal ( Su ) à impulsion d'origine a un niveau bas et on réalise la proportion ( N/2 ) restante des impulsions de commutation supplémentaires dans un laps de temps dans lequel le signal ( Su ) de commande d'origine a un niveau haut et/ou
b) on décale des instants ( t1 t2 ) de commutation d'origine du signal ( Su ) à impulsion d'origine de manière à obtenir, pour un signal de commutation résultant de l'addition des impulsions de commutation supplémentaires au signal à impulsion d'origine, une surface tension-temps qui est égale à une surface tension-temps du signal à impulsion d'origine.

13. Onduleur ( 28 ) qui a deux entrées ( 34, 36 ) de la tension continue et au moins deux branches ( 38 ) de phase, chaque branche ( 38 ) de phase ayant une sortie ( 40 ) de la tension alternative, un pont ( 42' ) de commutation pour le couplage électrique alterné de la sortie ( 40 ) de la tension alternative aux entrées ( 34, 36 ) de la tension continue et
un modulateur ( 46 ) de commande du pont ( 42' ) de commutation au moyen d'un signal ( Su, Sv, Sw ) à impulsion, le modulateur ( 46 ) étant conformé de manière à produire le signal ( Su, Sv, Sw ) à impulsion,
a) sous la forme d'un émetteur ( 46 ) d'impulsions ayant une période ( Tu, Tv, Tw ) définie à l'avance ou
b) sous la forme d'un régleur ( 46 ) de bande de tolérance, **caractérisé en ce que** l'onduleur est conformé pour effectuer un procédé suivant l'une des revendications précédentes.

14. Onduleur ( 28 ) suivant la revendication 13, dans lequel un ou plusieurs ou chacun des ponts ( 38 ) de commutation a respectivement au moins un module à semiconducteur comme élément ( 42 ) de commutation, qui a un commutateur actif, dont l'entrée de commande est reliée au modulateur ( 46 ), et une diode de roue libre, le commutateur actif et la diode de roue libre étant constitués sous la forme d'un composant monolithique.

15. Onduleur ( 28 ) suivant l'une des revendications 13 ou 14, dans lequel, pour l'un ou plusieurs ou chacun des ponts ( 42' ) de commutation, respectivement un commutateur actif et une diode de roue libre associées sont réalisés sous la forme de composants distincts, qui sont couplés thermiquement par un élément de conduction de la chaleur, l'élément de conduction de la chaleur ayant une conductibilité de la chaleur d'au moins 4 W/cm*K ), notamment d'au moins 20 W/( m*K ), de préférence d'au moins 40 W/( m*K ).

16. Convertisseur ( 20 ) de fréquence ayant une unité ( 24 ) d'alimentation, un circuit intermédiaire ( 26 ) de tension continue relié à celle-ci et un onduleur ( 28 ) relié à celui-ci, l'unité ( 24 ) d'alimentation étant conçue pour produire dans le circuit ( 26 ) intermédiaire une tension ( U ) continue à partir d'une tension alternative d'un réseau ( 22 ) d'alimentation, **caractérisé en ce que** l'onduleur ( 28 ) est conformé suivant l'une des revendications 13 à 15.

17. Machine ( 10 ) électrique ayant un stator ( 12 ) et un rotor ( 14 ) et un onduleur ( 38 ) suivant l'une des revendications 13 à 15, l'onduleur ( 38 ) étant conçu pour alimenter des enroulements ( 16 ) électriques du stator ( 12 ) en alternance en un courant ( Iu, Iv, Iw ) d'un circuit intermédiaire ( 26 ) de tension continue.
